(19) Europäisches Patentamt
European Patent Office
Office européen des brevets

(11) Publication number: **0 224 300 B1**

(12) **EUROPEAN PATENT SPECIFICATION**

(45) Date of publication of patent specification: **15.04.92**

(51) Int. Cl.$^5$: **H04Q 9/14**

(21) Application number: **86202009.6**

(22) Date of filing: **14.11.86**

# (54) Remote supervisory and controlling system.

(30) Priority: **25.11.85 JP 264206/85**

(43) Date of publication of application:
**03.06.87 Bulletin 87/23**

(45) Publication of the grant of the patent:
**15.04.92 Bulletin 92/16**

(84) Designated Contracting States:
**DE FR GB**

(56) References cited:
**DE-A- 3 415 008**
**FR-A- 2 526 980**
**GB-A- 2 039 402**

**PATENT ABSTRACTS OF JAPAN, vol. 9, no. 208 (E-338)[1931], 24th August 1985; & JP-A-60 72 399**

**PATENT ABSTRACTS OF JAPAN, vol. 8, no. 190 (E-263)[1627], 31st August 1984; & JP-A-59 80 095**

(73) Proprietor: **MATSUSHITA ELECTRIC WORKS, LTD.**
**1048, Oaza-kadoma**
**Kadoma-shi Osaka 571(JP)**

(72) Inventor: **Masuda, Toshiyuki**
**403, Kamada-cho**
**Matsuzaka-shi Mie 515(JP)**
Inventor: **Yamada, Osamu**
**401, 20-14, Higashi-Nakaburi 1-chome**
**Hirakata-shi Osaka 573(JP)**
Inventor: **Hamada, Akihiko**
**23-301, Kiyotakinaka-machi**
**Shijonawate-shi Osaka 575(JP)**
Inventor: **Kanaya, Masayuki**
**99, Owase-cho**
**Matsuzaka-shi Mie 515(JP)**

(74) Representative: **de Vries, Johannes Hendrik Fokke et al**
**Octrooibureau Los en Stigter B.V. P.O. Box 20052**
**NL-1000 HB Amsterdam(NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services

**Description**

TECHNICAL BACKGROUND OF THE INVENTION

This invention relates to remote supervisory and controlling systems and, more particularly, to a system for remotely supervising and controlling respectively a plurality of operating, monitoring and controlling terminal units connected through a two-wire signal line to a central control unit for a time-divisional multiplex transmission between them of input and control data.

The remote supervisory and controlling system of the type referred to can control as centralized a plurality of operating and monitoring terminal units (which are also referred to as "input terminal units" as well as a plurality of control terminal units, so that the system can be effectively utilized in controlling, for example, many of such loads as luminair, detectors and the like connected to a plurality of input terminal units located at various positions in a multi-storied building from a remote control room therein.

DISCLOSURE OF PRIOR ART

Generally, in carrying out the remote supervision and control, it will be possible to utilize such a load control system employing a time-divisional multiplex transmission as disclosed in, for example, U.S. Patent No. 4,608,561 to Y. Kojima et al. Briefly describing, the patent shows an arrangement wherein a plurality of terminal units are connected to a central control unit for their two-way free control in both of automatic and manual manners, and this arrangement may be advantageously utilized for enhancing the freedom of control of the terminal units.

The automatic control by means of the central control unit is carried out, in this patent, in such that the central control unit cyclically makes a sequential access to the terminal units so as to perform the time-divisional multiplex transmission of input and control signal data. When the terminal units to be controlled by the central control unit are increased in number, however, there arises a problem that the response of the system is disadvantageously caused to be delayed depending on the timing of data input. That is, provided that l28 of the terminal units are to be controlled by the central control unit and l28 channel addresses are set, the sequential access has to be made from lst to l28th channels so that, if the central control unit receives a data input from one of the input terminal units which corresponds to the first channel during the access to second channel, a required time T until the first channel is subjected to a next cycle access will be represented by T = l27To, wherein To is an access time for each of the terminal units, and input data reception by the central control unit will be remarkably delayed. When, lin particular, this remote supervisory and controlling system is applied to the centralized control of many lighting device in a multi-storied building in association with intruder sensors incorporated as the monitoring terminal units for lighting one or more of the lighting devices in response to an abnormality signal from the sensors, there arises a risk that the required time for the eventual lighting becomes too long to render the system to be sufficiently effective.

TECHNICAL FIELD OF THE INVENTION

A primary object of the present invention is, therefore, to provide a remote supervisory and controlling system which can respond immediately to a data signal input, regardless of its timing, coming from operating and monitoring terminal units connected to a central control unit, for controlling a predetermined one or ones of the terminal units.

According to the present invention, the above object is realized by providing a remote supervisory and controlling system wherein respectively a plurality of input and control terminal units each having a specific address set therefor are connected through a two-wire signal line to a central control unit, a time-divisional multiplex transmission of such various signals as address data signal for calling the terminal units, control data signal for controlling loads, input data signal from the terminal units and return wait signal for setting period of return signal from the terminal units is performed through the two-wire signal line, and each of the terminal units takes up the transmitted signals upon coincidence in address data of the signal wilth the specific address data set for each terminal unit and returns its input data signal to the central control unit in synchronism with the return wait signal. Such a system is known e.g. from FR-A-2 526 980 The arrangement according to the present invention is such that the central control unit comprises means for constantly providing a dummy transmission signal, and means responsive to an interruption signal from any input terminal unit for processing the interruption by making an access to the said terminal unit having generated the interruption signal to have the input data signal returned therefrom; and the input terminal units comprise respectively means responsive to an input data for generating the interruption signal in synchronism with a start pulse signal of the dummy transmission signal and returning its specific address data signal in synchronism with the return wait signal of an address confirmation mode signal from the central control unit, and means responsive to an access mode transmission signal provided from the central control unit in response to the interruption signal for returning to the central control unit the input data signal corresponding to the input data; whereby the control data signal to be transmitted to the control terminal unit is prepared on the basis of the input data signal returned from the input terminal unit to the central control unit.

Other objects and advantages of the present invention shall be made clear in the following description of the invention detailed with reference to a preferred embodiment shown in accompanying drawings.

## BRIEF EXPLANATION OF THE DRAWINGS

FIGURE I schematically shows, partly in block diagram, a general arrangement of the remote supervisory and controlling system according to the present invention;

FIG. 2 shows a practical wiring example of the central control unit and respective operating, monitoring and controlling terminal units in the system of FIG. I;

FIG. 3 shows in a schematic sectional view a practical example in which the system of FIG. I is applied to a multi-storied building;

FIG. 4 is a circuit diagram showing details of a control panel including the central control unit and controlling terminal units in the system of FIG. I, with operating terminal units shown as connected to the panel;

FIG. 5 is a magnified perspective view of the control panel substantially corresponding to that of FIG. 4;

FIG. 6 is an example shown in a circuit diagram of the central control unit in the system of FIG. I;

FIG. 7a is a waveform diagram of the dummy transmission signal constantly provided by the means therefor in the central control unit in the system of FIG. I;

FIG. 7b is a waveform diagram of an example of the interrupt signal from the operating terminal unit in the system of FIG. I;

FIG. 8 is a circuit diagram showing an example of the control terminal unit in the system of FIG. I;

FIG. 9 shows in a block diagram the operating terminal unit in the system of FIG. I;

FIG. I0 is a circuit diagram showing an example of a remote control switch in the system of FIG. I;

FIG. II is a perspective view showing in a practical example the operating terminal unit in the system of FIG. I;

FIG. I2 is a flowchart showing an operational relationship between the central control unit and the operating and monitoring terminal units in the system of FIG. I;

FIG. I3 is a flowchart showing the operation of the central control unit with respect to the operating and monitoring terminal units in the system of FIG. I; and

FIG. I4 is a flowchart showing the operation of the central control unit with respect to the operating terminal units in the system of FIG. I.

While the present invention shall now be described with reference to the preferred embodiment shown in the drawings, it should be understood that the intention is not to limit the invention only to the particular embodiment shown but rather to cover all alterations, modifications and equivalent arrangements possible within the scope of appended claims.

## DISCLOSURE OF PREFERRED EMBODIMENT

Referring to FIG. I, the remote supervisory and controlling system according to the present invention comprises generally a central control unit I0, respectively a plurality of operating and monitoring (i.e., input) terminal units I2 and I3, and a plurality of controlling terminal units I4, all of which terminal units I2-I4 are connected through a two-wire signal line II and have respectively a specific address set therefor. The central control unit I0 comprises means for providing such a dummy transmission signal Vs as shown in FIG. 7a to the signal line II, so that a bipolar (±24V) time-divisional multiplex transmission signal containing a start pulse signal ST indicative of the start of the transmission signal, a mode data signal MD indicative of signal mode, an address data signal AD for calling any one or ones of the terminal units I2, I3 and I4, a control data signal CD for controlling loads I5 connected to the system, a check sum data signal CS and a return wait signal WT for setting the period of a return signal from the terminal units I2, I3 and I4 is constantly provided from the unit I0 onto the line II, and the data transmission is performed with a pulse-width modulation. The central control unit I0 also comprises means responsive to such an interruption signal Vi returned to the unit as shown in FIG. 7b for processing the interruption by detecting one of the input terminal units I2 and I3 which has generated the interruption signal and making an access to the detected terminal unit for having its input data returned therefrom to the control unit.

Each of the terminal units I2, I3 and I4 is arranged so that, when the address data signal AD of the dummy transmission signal Vs received through the signal line II by the terminal unit coincides with its specific address data, the terminal unit takes up the control data signal CD of the transmission signal Vs and sends out an input data signal as a current mode signal (a signal provided by short-circuiting two wires of the signal line II

with an interposition of a proper low impedance) in synchronism with the return wait signal WT. In particular, the input terminal units l2 and l3 comprise respectively an interruption signal generating means which is responsive to an occurrence of input data for generating the interrupt signal Vi in synchronism with the start pulse signal ST of the dummy signal transmission signal Vs and returning the specific address data to the central control unit l0 as an address confirmation mode for the address from the unit l0 in synchronism with the return wait signal WT, and means which is responsive to an interrupt-access mode transmission signal from the central control unit l0 for returning the data signal corresponding to the input data, so that the central control unit l0 can prepare the control data signal CD to be transmitted to the controlling terminal units l4 on the basis of the input data returned from the input terminal units l2 and l3 to the control unit l0.

When the loads l5 are a plurality of lighting devices, the operating terminal units l2 include such operational input means as separately operating switches l6a for controlling individual ones of the loads l5, a selector switch l6b for selectively partly controlling one or more of the loads l5, a pattern switch l6c for controlling the loads l5 collectively in a predetermined pattern, a dimmer switch l6d for adjusting light intensity of the loads l5, a temporary lighting switch l6e for lighting the loads l5 temporarily, for example, for a period of 30 to 300 seconds, and a delay switch l6f for delaying the turning off of the loads l5 by a predetermined period, for example, of 30 to 300 seconds. As a separate input means, a set input unit l7 may be connected to the signal line ll, which input unit l7 is provided with a timer setting unit l8a, a calendar type time switch l8b, a room EE switch and the like, so that a sequence controlling input data can be selectively provided to the central control unit l0 in a predetermined pattern. The set input unit l7 may be regarded in a broad sense as one of the monitoring terminal units l3. Further, the monitoring terminal units l3 are connected to such monitoring input means as a sensor l9a for detecting sunlight, a fire sensor l9b for fire protection, a burglar or the like sensor l9c for crime prevention and the like sensors.

A booster 20 for compensating for attenuation in the dummy transmission signal Vs is connected to the signal line ll, and a continuous switch 2l is connected as another terminal unit to terminating end of the signal line ll, so that a second remote supervisory and controlling system (not shown) of the same specifications as the present system can be operatively coupled to the present system through the switch unit 2l, a proper connection through which unit to the line ll of a further two-wire signal line lla for the second system makes it possible to enlarge the system to be of a vast scale for realizing a broader supervision and remote control.

The system of the present invention includes a remote control switch 22 provided to be near at hand of the operator for parallel use with the foregoing terminal switches, and this remote control switch 22 is made to provide a control output equivalent to that of the operating terminal units l2. The control outputs of the controlling terminal units l4 and remote control switch 22 are provided to remote control relays 23a, 23b,...23n which directly control the loads l5, the relays being controlled in parallel with one another for eventual parallel control of the respective loads l5 as required. In the illustrated embodiment, the controlling terminal units l4 and relays 23a, 23b,...23n are supplied with an electric power through a transformer 24. The central control unit l0, controlling terminal units l4, remote control relays 23a, 23b,...23n and transformer 24 are mounted on a control panel 25. Though the power supply and signal transmission lines are illustrated respectively by a single line in FIG. l, the respective constituent members are connected with one another in practice by such two-wires as shown in FIG. 2. Further, another control terminal unit l4a can be incorporated in the remote control relays as shown in FIG. 2. Other input means than those exemplified in the foregoing may be employed as the operating or monitoring terminal units l2 or l3 and, preferably, an input means is incorporated in the respective terminal units. While FIG. l shows that the switches, sensors and so on associated with the respective operating and monitoring terminal units l2 and l3 or the set input unit l7 are separately provided with respect to the units, it is preferable in practice to accommodate them within an integral casing, or a proper combination of a plurality of the terminal units and their associated switches or sensors may be housed in a single casing as shown in FIG. l as being enclosed in a chain-line frame.

More definitely, the operating terminal unit l2, for example, is so provided that, as seen in FIG. ll, its casing 80 is mountable to a three-unit type metal fitting 8l for mounting thereto general wiring equipments, and is made to have the same dimensions as those of ordinary flush type wiring equipments for being mounted as housed in a flush box in similar manner to these equipments. In the illustrated case, three pattern switches 82a, 82b and 82c forming the switch SW20 of FIG l0 and performing the same function as the pattern switch l6c of FIG l are disposed in the lower part on the front side of the casing 80, and an address setting switch 83 comprising a dip switch for setting the lower 4 bits of the address data for the terminal units is disposed above the switches 82a to 82c. Further above the address setting switch 83, there are provided a mode selector switch 84 for a pattern setting mode and a usual operational mode, and a set mode switch 85 for the monitor data input and selecting a whole pattern setting or a partial pattern setting, and further disposed above which switches 84 and 85 are light-emission indicators 86a, 86b and 86c corresponding respectively to the pattern switches 82a, 82b and 82c and equal to the light emitting diodes LD2l and LD22 of FIG. l0 for indicating ON state of one of the pattern switches 82a, 82b and 82c, as well as a set state indicator 86. It will be understood that, with this arrangement, any desired one or ones of the loads can be controlled in a desired pattern.

The system of FIG. l may be effectively used with respect to such a multi-storied building as shown in FIG. 3, in which event the input terminal units are provided on each floor of the building. That is, the operating switches l6a and selector switches l6b connected to the operating terminal units l2 as well as the sunlight sensors l9a, fire sensors l9b and burglar sensors l9c connected to the monitoring terminal units l3 may be provided for the respective building floors as connected to the two-wire line ll extended from the control panel 25.

Referring to FIGS. 4 and 5, there is shown an example of mounting array on the control panel 25 of the constituent members in the present system, more in details and practical manner than that shown in FIG. 2. In the array, the central control unit l0, one group of the remote control relays 23 and output controlling terminal unit l4b are mounted on one of a pair of DIN rails 26 and 26a of the control panel 25, whereas the transformer 24, the other group of the relays 23 and monitoring terminal unit l3a for receiving monitoring inputs from no-voltage contacts of a timer circuit 27 are mounted on the other rail, so as to be arranged in two rows. The control terminal units l4 are arranged in a row in a space between the both groups of remote control relays 23a, 23b,...23n, for their direct control. Attached onto the top sides of the controlling and monitoring terminal units l4b and l3a are switches 28 and 29 for setting their specific addresses. With such array as mentioned above, similarly to the case of such other wiring equipments as electromagnetic relays, circuit breakers and the like, the constituent members are made mountable in the form of module so as to be easily installed on the control panel 25 together with such other wiring equipments as above.

If required, any other type of the operating terminal unit may be connected to the control terminal units. For example, it is possible to employ a terminal unit l2a incorporating a composite input means of integralized selector and pattern switches l6b and l6c, or a terminal unit l2b incorporating an input means of integralized pattern and pattern-setting switches l6c and l6g. In these terminal units l2a and l2b, there are provided ON/OFF displays 30 by means of light emitting diode, operating-pattern nameplates 3l and operating buttons 32.

Referring to FIG. 6, the central control unit l0 practically comprises a CPU-formed signal processing circuit 40, transmission signal generating and received-signal discriminating circuits 4l and 42 connected to the signal processing circuit 40, a signal sending/receiving circuit 45 including a signal sending circuit 43 and a signal receiving circuit 44, and a power supply circuit 46. The before described dummy signal transmitting means and interruption processing means are realized here by the signal processing circuit 40, transmission signal generating circuit 4l and received-signal discriminating circuit 42 and, as partly before described, such dummy transmission signal as shown in FIG. 7a is constantly generated. The signal sending circuit 43 comprises a photo-coupler PCl for a circuit isolation, transistors Ql to Q4, operational amplifiers OPl and OP2 and three-terminal regulators VRl and VR2, so that transistors Ql and Q4 or Q2 and Q3 turned ON in response to the level "H" or "L" of the pulse-width-modulated data signal emitted from the transmission signal generating part 4l will generate the bipolar transmission signal Vs of ±25V, the voltage of which signal is stabilized by the three-terminal regulators VRl and VR2, and the dummy transmission signal will be provided onto the signal line ll.

On the other hand, the signal receiving circuit 44 comprises a photo-coupler PC2 also for the circuit isolation, operational amplifiers OP3 and OP4, diodes Dl to D3, a Zener diode ZD, a light emitting diode LD, a transistor Q5, at least resistors Rl to R4 and capacitor C, so that the return signal sent as the current mode signal from the respective terminal units l2, l3 and l4 through the signal line ll will be detected by a return signal detecting means consisting of the current detecting resistor Rl, Zener diode ZD and operational amplifier OP3. That is, when a voltage across the current detecting resistor Rl through which the signal current flows exceeds a sum value of the terminal voltage of the resistor Rl added to a reference voltage set by the Zener diode ZD, the operational amplifier OP3 has an output of "L" level, whereby the light emitting diode LD for operation indication and a light emitting diode of the photo-coupler PC2 are turned ON, whereby the reception of the return signal is indicated by the light emitting diode LD and the return signal is sent to the received-signal discriminating circuit 42 through the photo-transistor of the photo-coupler PC2 and the transistor Q5.

A circuit for detecting any short-circuiting in the signal line ll is formed by the diode D2 and the operational amplifier OP4 which compares a divided voltage of the reference voltage set by the Zener diode ZD as divided by the resistors R2 and R3 with the voltage across the current detecting resistor Rl to which the signal current is sent from a noise eliminating circuit of the resistor R4 and capacitor C so that, when a large short-circuit current due to the short-circuiting in the signal line ll causes the voltage across the current detecting resistor Rl to exceed the divided voltage, the output level of the operational amplifier OP4 will be "L" and the light emitting diode LD for operation indication and the light emitting diode of the photocoupler PC2 will be turned ON while the light emitting diode LD is continuously lit, whereby the short-circuit detecting circuit indicates the short-circuiting in the signal line ll.

The power supply circuit 46 includes diode bridge circuits DBl and DB2 and a three-terminal regulator VR3, and functions to smoothly rectify an output of a signal power source ACl for sending it to the signal sending and receiving circuit 45, and also to smoothly rectify an output of a control power source AC2 to a constant voltage for sending it to the signal processing circuit 40, transmission signal generating circuit 4l and received-signal discriminating circuit 42.

Shown in FIG. 8 is a practical example of the control terminal unit l4, which comprises a circuit for receiving the dummy transmission signal Vs transmitted through the signal line ll, a circuit 5l for setting a specific address for each terminal unit, a signal processing circuit 52 for detecting the coincidence between the address data signal of the signal Vs and the specific address and, upon such coincidence, taking up the control data signal from the signal Vs to generate a control output Vc, a pulse conversion circuit 53 forming a set pulse signal $V_{CS}$ and a reset pulse signal $V_{CR}$ for the remote control relays 23a, 23b,...23n in response to the level "H" or "L" of the control output Vc, a relay driver circuit 54 including transistors Qll and Ql2 and photo-thyristors PSll and PSl2 for generating signals driving the relays 23a, 23b,...23n, a monitoring input circuit 55 including a photo-coupler PCl0 receiving monitoring data indicative of the operational state of the relays 23a, 23b,...23n, and a return circuit 56 for returning the monitored data signal as the current mode signal to the central control unit l0 during a return signal period set by the return wait signal WT. With this arrangement, the control terminal unit l4 is made to take up the transmitted control data signal upon access to this unit of the central control unit l0, so as to generate the drive signal for the remote control relays 23a, 23b,...23n to turn ON and OFF the loads l5 and also return to the central control unit l0 the monitored data signal indicative of the operational state of the relays 23a, 23b,...23n.

The monitoring terminal unit l3 is arranged substantially in the same manner as the control terminal unit l4, except that the pulse conversion circuit 53 and relay driver circuit 54 in the control terminal unit l4 are omitted in the monitoring terminal unit l3, and that the signal processing circuit in the monitoring terminal unit l3 comprises the interruption signal generating and data returning means for sending the interruption signal Vi and returning the monitored data signal upon occurrence of the monitor input.

As will be clear from a comparison of FIG. 9 with FIG. 8, the operating terminal unit l2 is also substantially of the same arrangement as the control terminal unit l4, except that the pulse conversion circuit 53 in the control terminal unit l4 is omitted and the relay driver circuit 54 is replaced by an LED driver circuit 64 for driving a light emitting diode 64a, and that a monitoring circuit 57 provides an input data signal in response to an input from such various switches 58 as the dimmer switch l6d and others shown in FIG. l, which input data signal is sent to a signal processing circuit 62 which in turn generates a data signal similar to the interruption signal Vi in the monitoring terminal unit l3, the data signal being sent to the central control unit l0.

In setting the specific address for the respective terminal units l2, l3 and l4, desirably, 8 bit address data is employed, lower 6 bits of which are made to be for use by the user and upper 2 bits of which are for use by the manufacturer. Therefore, the respective addresses for the operating, monitoring and controlling terminal units l2, l3 and l4 are to be so set that, for example, the user-use bits are set to have the same value throughout the units, to thereby establish the correspondence of each of the operating and monitoring terminal units l2 and l3 to each of the control terminal units l4, whereby the remote control relay corresponding to one of the control terminal units l4 is driven in response to the monitored data returned from one of the operating and monitoring terminal units l2 and l3 of the same bit value and eventually a control of a desired one of the loads l5 is executed. When, for example, the first and second bits of the address data for each of the operating and monitoring terminal units l2 and l3 and for each of the control terminal units l4 as well are fixedly set by the manufacturer to be "0,0" and "0,l", respectively, and the third to eighth bits of the address data are left to be settable by the user, channels l to 63 are allocated to the operating and monitoring terminal units l2 and l3 while channels l28 to l9l are allocated to the control terminal units l4. It should be here appreciated that the correspondence between the operating and monitoring terminal units l2, l3 and the control terminal unit l4 in setting the third to eighth bits of their addresses is made l:l, that is, in the channels, 0→l28, l→l29,...63→l9l.

Referring again to FIG. 8, the remote control relay 23a shown to be energizably connected to one of the control terminal units l4 comprises a latching relay RRl0 having main and auxiliary contacts CONll and CONl2 operatively interlocked with each other, and current switching diodes Dll and Dl2 connected in series with an exciting coil Ll0 of the latching relay RRl0. When a set current of a predetermined level is passed through the coil Ll0 for a predetermined period from the power source ACll through the transformer 24 (FIG. l) and diode Dll, the main contact CONll is made ON to supply a power from the commercial power source ACl2 to the load l5, upon which the auxiliary contact CONl2 is inversely operated to switchingly connect the diode Dl2 to the coil Ll0 so that a reset current is supplied from the AC power source ACll through the diode Dl2 to the coil Ll0, whereby the main contact CONll breaks to stop the current supply to the load, and the auxiliary contact CONl2 is inversely switched to the position connected to the diode Dll.

When the photo-thyristor PSll included in the relay driver circuit 54 of the control terminal unit l4 is turned ON, the main contact CONll of the latching relay RRl0 in the remote control relay 23a makes to supply power to the load l5, whereas, when the photo-thyristor PSl2 is turned ON, the main contact CONll of the latching relay RRl0 in the relay 23a breaks to interrupt the power supply to the load l5.

As partly described before, the remote control relays are provided to be controlled in parallel relation to one another by the remote control switch 22, and this switch 22 is provided to have substantially the same function as the control terminal unit l4. Referring to FIG. l0, the remote control switch 22 comprises a set/reset circuit 70 including more than one of a switch SW20 and diodes D2l and D22, and an ON/OFF display circuit 7l including light emitting diodes LD2l and LD22 and diodes D23 and D24 respectively connected in series with each of the diodes LD2l and LD22. Accordingly, with the switch SW20 depressed to form a circuit with the diode D2l or D22, a set or reset current can be supplied to the excitating coil Ll0 of the relay RRl0, and the operation can be indicated by the light emitting diode LD2l or LD22.

Next, the operation of the system according to the present invention will be explained in summary with reference to FIGS. l2 to l4. When the system of, for example, FIG. l is connected to the power source and the supervising and controlling operation starts, the central control unit l0 makes initially the access to the control terminal units l4 to confirm the control state of the loads connected to the units, and then the sequential access to the input terminal units l2 to turn ON or OFF the light emitting diodes respectively connected to the units l2 for indication of their operating state in accordance with the operational state of the corresponding loads l5. That is, if the state of any load is in conformity to the set pattern of the control pattern switch l6c, then the light emitting diode corresponding to such load is lit.

The dummy-signal sending means comprising the signal processing circuit 40 and others in the central control unit l0 provides onto the signal line ll the dummy transmission signal Vs for an access to any idle address other than the specific addresses set for the respective operating, monitoring and controlling terminal units l2, l3 and l4. Since no address coincidence is obtained at any terminal unit during such normal operation in which the dummy transmission signal Vs is constantly provided, no data transmission is performed between the central control unit l0 and the respective terminal units l2, l3 and l4, and the system is on standby. When there occurs an input at the input means of the operating or monitoring terminal unit l2 or l3 or, when, for example, the separate operating switch l6a is actuated and corresponding terminal unit l2 receives an input, the interrupt signal generating means comprising the signal processing circuit 62 in the operating terminal unit l2 generates the interrupt signal Vi and provides it onto the signal line ll in synchronism with the start pulse signal ST of the dummy transmission signal Vs.

When the interruption processing means in the central control unit l0 receives the interruption signal Vi from the operating terminal unit l2, the central control unit l0 carries out the access to the terminal units l2 to detect one of them which has provided the interruption signal, and sends to the particular terminal unit l2 detected an address confirmation mode signal for having the address data signal returned from the particular terminal unit l2. Upon receipt of the address confirmation mode signal, the interruption signal generating means in the particular terminal unit l2 returns its specific address data to the central control unit l0 in synchronism with the return wait signal WT of the dummy transmission signal Vs. The address data from the terminal unit is received at the interruption processing means in the central control unit l0, and the transmission signal in interruption access mode is sent from the unit l0 to the particular terminal unit l2 in the input means of which the input has taken place. The data return means in the particular terminal unit l2 responses to this access mode transmission signal received and returns to the central control unit l0 the data corresponding to the input in synchronism with the return wait signal WT of the dummy transmission signal Vs. The input data thus returned from the particular terminal unit l2 to the central control unit l0 is processed by the signal processing circuit 40 and so on to prepare data for controlling one of the loads l5 which corresponds to the particular terminal unit l2 and a transmission signal for an access to one of the control terminal units l4 which corresponds to the particular terminal unit l2.

The control terminal unit l4 having received the transmission signal controls one of the remote control relays 23a to 23n for ON or OFF control of the corresponding load l5 on the basis of the control data from the central control unit l0, and returns the data indicative of the control state of the load to the control unit l0. The sequential access of the control unit l0 is carried out with respect to the terminal units on the basis of the data returned from the control terminal unit l4 to control the ON and OFF operation of the load-operation-indicating light emitting diodes for renewing their indication according to the operational state of the corresponding load l5, and a series of the monitoring and controlling operation is completed. Thereafter, the central control unit l0 is restored to the standby state of constantly transmitting the dummy transmission signal Vs.

If the terminal unit which has provided the interrupt signal is the one that can execute a temporary operation, then the central control unit l0 judges whether the input data from this terminal unit is of the normal mode or the temporary mode and, if the input data is of the normal mode, the central control unit l0 sends the ON or OFF control data to the associated control terminal unit or, if it is of the temporary mode, then the unit l0 sends the ON control data to the corresponding control terminal unit l4, to have a time counting started and, upon a predetermined time lapsed, to have the OFF control data sent to the unit l4 to energize the corresponding load l5 for a predetermined time, as seen in the flowchart of FIG. l4.

Further, when the central control unit l0 receives inputs from both of the operating and monitoring terminal units l2 and l3 substantially simultaneously, the unit l0 processes first the input data from the monitoring terminal unit l3 preferentially, and this preferential data processing is carried out also upon receipt of the input data from the monitoring terminal unit l3 during the processing of the input data from the operating terminal unit l2. Since the interruption signal Vi from the operating and monitoring terminal units, i.e., input terminal units is processed always prior to any other signal processing, further, the central control unit l0 can rapidly take up the input data signal from any input terminal unit which generating the interruption signal, so that even a remarkable increase in the number of the input terminal units causes no substantial deterioration in the response of the system. Further, by means of the light emitting diodes connected to the terminal units, the indication of signal reception state, i.e., the ON and OFF indication or the short-circuiting indication for the signal line can be made possible while simplifying indicating arrangement. An additional use of differently colored light emitting diodes emitting, for example, red and green light for the ON or OFF indication may further improve the display function of the system.

In addition, the remote supervisory and controlling system of the present invention may be modified in various ways. For example, the signal processing circuit 40 in the central control unit l0 may be provided with a memory means for storing the system programs of the processing circuit 40, corresponding address relationship between the input terminal units l2, l3 and the control terminal units l4, data processing sequence, temporarily-held data and so on, as will be readily appreciated by those skilled in the art. For the signal discrimination in the central control unit l0, a clock generator may be advantageously employed particularly when time counting is effected by means of the control data for the control terminal units l4 to control them in accordance with thereby counted time. Also, when the signal processing circuit 62 of the operating terminal unit l2 is provided so as to receive an output of an input mode setting circuit to which the input to the input mode switch is provided for discriminating the input data of the separate operating switch l6a from that of the temporary lighting switch l6e, the system can be further improved in the responsibility. The monitoring terminal units l3 may be operatively connected to their corresponding monitor input means not by means of wire connection but through a wireless transmitting and receiving means.

Further, when the loads l5 are lighting equipments and a plurality of such dimmer switches l6d as shown in FIG. l are provided as the input means of the monitoring circuit 57 in the operating terminal unit l2, the system can realize not only the ON and OFF operation of the lighting equipments but also their various light intensity control operation. In this case, it will be readily understood that, when the control terminal unit l4 corresponding to the foregoing operating terminal unit l2 is provided with a triode AC switch (TRIAC) and its triggering circuit and the signal processing circuit 62 is arranged for varying the time constant of this triggering circuit and eventually the phase control angle of the TRIAC, the light intensity control of the lighting equipments can be made freely ase desired by varying the phase control angle, and various illumination effects can be realized.

## Claims

1. A remote supervisory and controlling system wherein respectively a plurality of input (12, 13, 17) and control terminal (14) units having each a specific address set therefor are connected through a two-wire signal line (11) to a central control unit (10); a time-divisional multiplex transmission of signals is performed through said signal line, said signals including address data signal (AD) for calling said terminal units, control data signal (CD) for controlling loads (15) associated with said terminal units, input data signal from the terminal units, and return wait signal (WT) for setting period of return signal from the terminal units; and said terminal units are respectively arranged to take up said signals transmitted from said central control unit upon coincidence of said address data signal to said specific address of each terminal unit, and to return said input data signal to the central control unit in synchronism with said return wait signal, characterized in that said central control unit (10) includes means (40, 41, 42) for constantly providing to said signal line a dummy transmission signal (Vs) and means responsive to a signal (Vi) indicative of an interruption from one of said input terminal units (12, 13) for processing said interruption by carrying out an access to said one of the terminal units which has generated said interruption signal to have said input data signal returned from the said terminal unit to the central control unit (10); and said input terminal units include respectively means (62) for generating, upon occurrence of an input causing said input data signal, said interruption signal (Vi) in synchronism with a start pulse (ST) of said dummy transmission signal and returning said specific address to the central control unit in synchronism with said return wait signal in response to an address confirmation mode signal from the central control unit, and means responsive to an address mode transmission signal provided from the central control unit in response to the interruption for returning to the central control unit said input data signal; said central control unit preparing said control data signal to be provided to said control terminal units on the basis of said input data signal returned from the input terminal unit.

2. A system according to claim l, wherein said central control unit (10) further includes timer means for counting a predetermined time to control said loads (15) according to counted time, in response to said input data.

3. A system according to claim l, wherein said loads (15) are lighting equipments, said input terminal units include a dimming terminal unit for providing lighting ON and OFF data as well as dimming data of said lighting equipments in response to a predetermined data, and said central control unit includes memory means for storing lighting ON and OFF control data as well as dimming control data for the lighting equipments in response to a predetermined input data.

4. A system according to claim l, wherein said input terminal units include a pattern input terminal unit (17) for preparing an input data for controlling said loads in unit groups, said pattern input terminal unit being provided with a mode selector switch which provides to said central control unit a selection data between a mode for setting the loads belonging to each unit group and their operation and a mode of normally controlling the loads.

## Revendications

1. Système de surveillance et de commande à distance dans lequel plusieurs unités terminales respectives d'entrée (12, 13, 17) et de commande (14), ayant chacune pour elle un jeu d'adresses spécifiques, sont connectées par une ligne (11) de signaux à deux fils à une unite centrale (10) de commande ; une transmission multiplex à répartition dans le temps de signaux est effectuée par ladite ligne de signaux, lesdits signaux comprenant un signal (AD) de donnée d'adresse destiné à appeler lesdites unités terminales, un signal (CD) de donnée de commande destiné à commander des charges (15) associées auxdites unités terminales, un signal de donnée d'entrée provenant des unités terminales et un signal (WT) d'attente de retour pour établir une période de signal de retour à partir des unités terminales ; et lesdites unités terminales sont agencées respectivement de façon à saisir lesdits signaux transmis depuis ladite unité centrale de commande lors d'une coïncidence dudit signal de donnée d'adresse et de ladite adresse spécifique de chaque unité terminale, et à retourner ledit signal de donnée d'entrée à l'unité centrale de commande en synchronisme avec ledit signal d'attente de retour, caractérisé en ce que ladite unité centrale (10) de commande comprend des moyens (40, 41, 42) destinés à fournir constamment à ladite ligne de signaux un signal de transmission fictive (vs) et des moyens qui, en réponse à un signal (Vi) représentatif d'une interruption depuis une première desdites unités terminales d'entrée (12, 13), sont destinés à traiter ladite interruption en accédant à ladite première des unités terminales qui a généré ledit signal d'interruption afin d'amener ledit signal de donnée d'entrée à retourner depuis ladite unité terminale à l'unité centrale (10) de commande ; et lesdites unités terminales d'entrée comprennent des moyens respectifs (62) destinés à générer, lors de l'apparition d'une entrée provoquant ledit signal de donnée d'entrée, ledit signal d'interruption (Vi) en synchronisme avec une impulsion de départ (ST) dudit signal de transmission fictive et à retourner ladite adresse spécifique à l'unité centrale de commande en synchronisme avec ledit signal d'attente de retour en réponse à un signal de mode de confirmation d'adresse provenant de l'unité centrale de commande, et des moyens qui, en réponse à un signal de transmission de mode d'adresse fourni par l'unité centrale de commande en réponse à l'interruption, sont destinés à retourner à l'unité centrale de commande ledit signal de donnée d'entrée ; ladite unité centrale de commande préparant ledit signal de donnée de commande à être fourni auxdites unités terminales de commande sur la base dudit signal de donnée d'entrée retourné depuis l'unité terminale d'entrée.

2. Système selon la revendication 1, dans lequel ladite unité centrale (10) de commande comprend en outre un moyen de temps destiné à compter un temps prédéterminé pour commander lesdites charges (15) conformément à un temps compté, en réponse à ladite donnée d'entrée.

3. Système selon la revendication 1, dans lequel lesdites charges (15) sont des appareils d'éclairage, lesdites unités terminales d'entrée comprennent une unité terminale de gradation destinée à produire des données d'allumage EN et HORS ainsi que des données de gradation desdits appareils d'éclairage en réponse à une donnée prédéterminée, et ladite unité centrale de commande comprend un moyen à mémoire destiné à stocker des données de commande d'éclairage EN et HORS ainsi que des données de commande de gradation pour les appareils d'éclairage en réponse à une donnée d'entrée prédéterminée.

4. Système selon la revendication 1, dans lequel lesdites unités terminales d'entrée comprennent une unité terminale (17) d'entrée de configuration destinée à préparer une donnée d'entrée pour commander lesdites charges dans des groupes d'unités, ladite unité terminale d'entrée de configuration étant pourvue d'un commutateur sélecteur de mode qui fournit à ladite unité centrale de commande une donnée de sélection entre un mode destiné à établir les charges appartenant à chaque groupe d'unités et leur fonctionnement et un mode de commande normale des charges.

**Patentansprüche**

1. Ein Fernüberwachungs und -steuerndes System, worin eine Mehrzahl von Eingabe- (12, 13, 17) und Steuerdatenstationseinheiten (14) jeweils mit einer speziellen für diese gesetzten Adresse durch eine Zweidrahtsignalleitung (11) an eine zentrale Steuerung (10) angeschlossen ist; eine zeitmultiplexe Signalübertragung durch besagte Signalleitung erfolgt, wobei besagte Signale ein Adreßdatensignal (AD) für den Aufruf besagter Datenstationseinheiten, ein Steuerdatensignal (CD) für die Steuerung der besagten Datenstationseinheiten zugeordneten Belegungen (15), ein Eingabedatensignal von den Datenstationseinheiten, und ein Rückführwartesignal (WT) für die Zeiteinstellung des Rückführsignals von den Datenstationseinheiten enthalten; und besagte Datenstationseinheiten so angeordnet sind, daß sie von besagter zentraler Steuerungseinheit bei Koinzidenz besagten Adreßdatensignals zu besagter spezieller Adresse einer jeden Datenstationseinheit besagte Signale aufnehmen, und besagtes Eingabedatensignal synchron mit besagtem Rückführwartesignal an die zentrale Steuerung zurückführen, dadurch gekennzeichnet, daß besagte zentrale Steuerung (10) Mittel (40, 41, 42) für die konstante Eingabe eines Pseudo-Übertragungssignals (Vs) in besagte Signalleitung, und auf ein Signal (Vi), das eine Unterbrechnung von einer der besagten Eingabedatenstationen (12, 13) anzeigt, ansprechende Mittel für die Verarbeitung besagter Unterbrechung durch Ausführung eines Zugriffs auf eine der besagten Datenstationen, die besagtes Unterbrechungssignal zwecks Rückführung des besagten Eingabedatensignals von besagter Datenstation zur zentralen Steuerung (10) erzeugt hat, enthält; und besagte Eingabedatenstationen bei einer das besagte Eingabedatensignal verursachenden Eingabe Mittel (62) für die Erzeugung des besagten Unterbrechungssignals (Vi) synchron mit einem Startimpuls (ST) des besagten Pseudo-Übertragungssignals enthält, die besagte spezielle Adresse an die zentrale Steuerung synchron mit besagtem Rückführwartesignal in Beantwortung eines Adressenbestätigungssignals von der zentralen Steuerung zurückführen, und Mittel, die auf ein von der zentralen Steuerung in Beantwortung der Unterbrechung für die Rückführung des besagten Eingabedatensignals zur zentralen Steuerung emittiertes Adressenübertragungssignal ansprechen; wobei besagte zentrale Steuerung das besagte an besagte Steuerdatenstationseinheiten zu übertragende Steuerdatensignal auf der Basis des besagten von der Eingabedatenstation zurückgeführten Eingabedatensignals vorbereitet.

**2.** Ein System nach Anspruch 1, worin besagte zentrale Steuerung (10) außerdem Zeitgebermittel zur Zählung einer festgelegten Zeit für die Steuerung besagter Lasten (15) in Übereinstimmung mit der gezählten Zeit in Beantwortung besagter Eingabedaten enthält.

**3.** Ein System nach Anspruch 1, worin besagte Lasten (15) Beleuchtungsvorrichtungen sind, besagte Eingabedatenstationen eine Lichtstellerstation enthalten, mit der die Datenbeleuchtung EIN- und AUS-geschaltet sowie die Daten besagter Beleuchtungsvorrichtungen als Antwort auf einen festgelegte Angabe helligkeitsgesteuert werden können, und besagte zentrale Steuerung Speichervorrichtungen für die Speicherung der Steuerdaten für Beleuchtung EIN und AUS sowie Helligkeitssteuerdaten für die Beleuchtungsvorrichtungen als Antwort auf eine festgelegte Eingabeangabe enthält.

**4.** Ein System nach Anspruch 1, worin besagte Eingabedatenstationen eine Eingangskonfigurationsstation (17) für die Vorbereitung einer Eingabeangabe zur Steuerung besagter Lasten in Einheitsgruppen enthält, wobei besagte Eingangskonfigurationsstation mit einem Betriebsartenwählschalter versehen ist, mit dem besagte zentrale Steuerung auf eine Wählangabe zwischen einer Betriebsart für die Einstellung der zu jeder Einheitsgruppe gehörenden Lasten und deren Betrieb und einer Betriebsart für normale Steuerung der Lasten geschaltet werden kann.

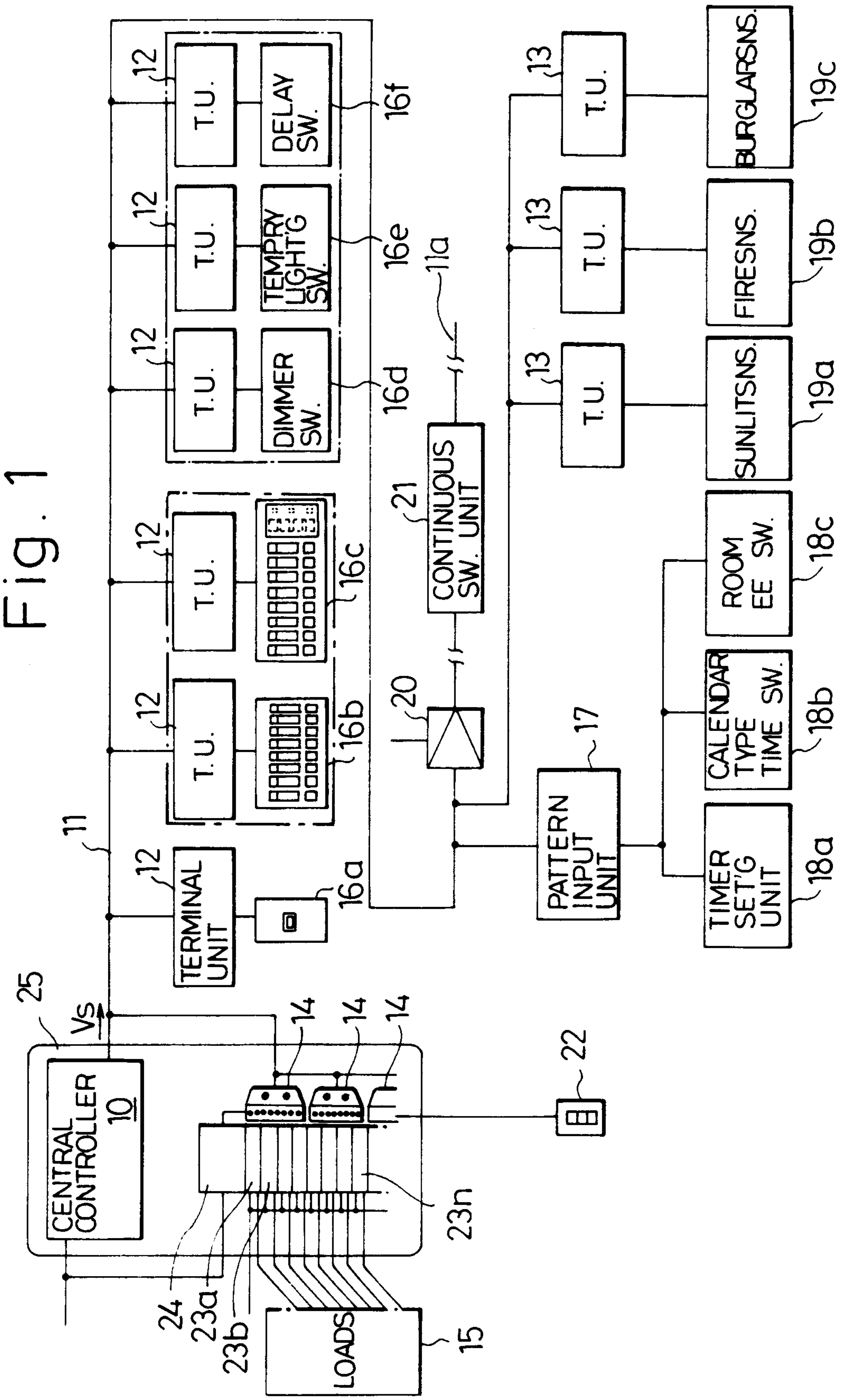
CENTRAL CONTROLLER 10
25
Vs
TERMINAL UNIT
12
11
16a
T.U.
16b
16c
DIMMER SW.
16d
TEMPRY LIGHT'G SW.
16e
DELAY SW.
16f
11a
20
21
CONTINUOUS SW. UNIT
17
PATTERN INPUT UNIT
13
SUNLITSNS.
19a
FIRESNS.
19b
BURGLARSNS.
19c
TIMER SET'G UNIT
18a
CALENDAR TYPE TIME SW.
18b
ROOM EE SW.
18c
14
22
23n
24
23a
23b
LOADS
15

Fig. 1

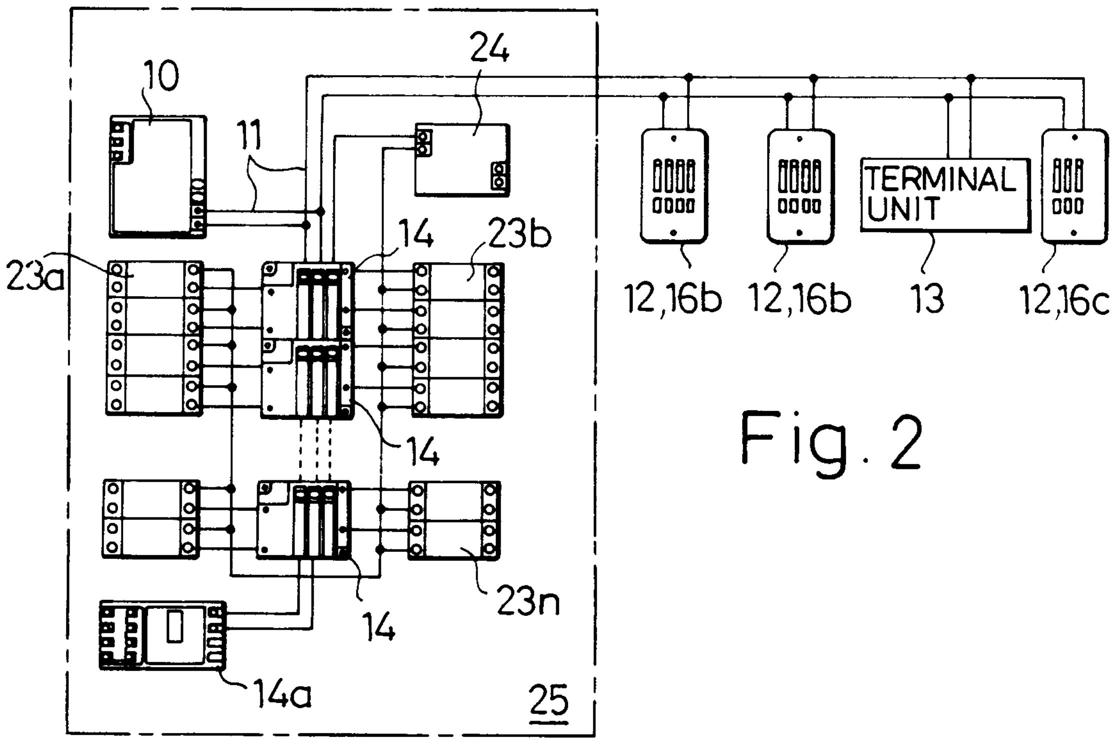
10
11
24
14
23b
23a
14
14
23n
14
14a
25
TERMINAL UNIT
12,16b
12,16b
13
12,16c

Fig. 2

Fig.11

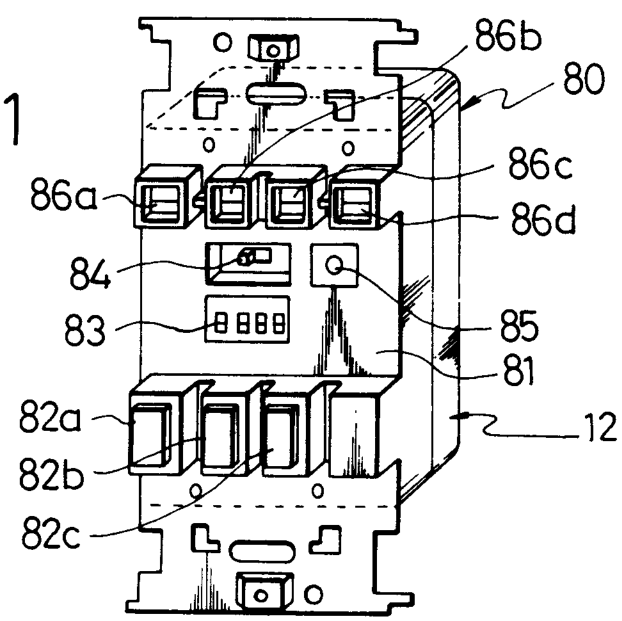
86b
80
86c
86a
86d
84
85
83
81
82a
12
82b
82c

Fig. 3

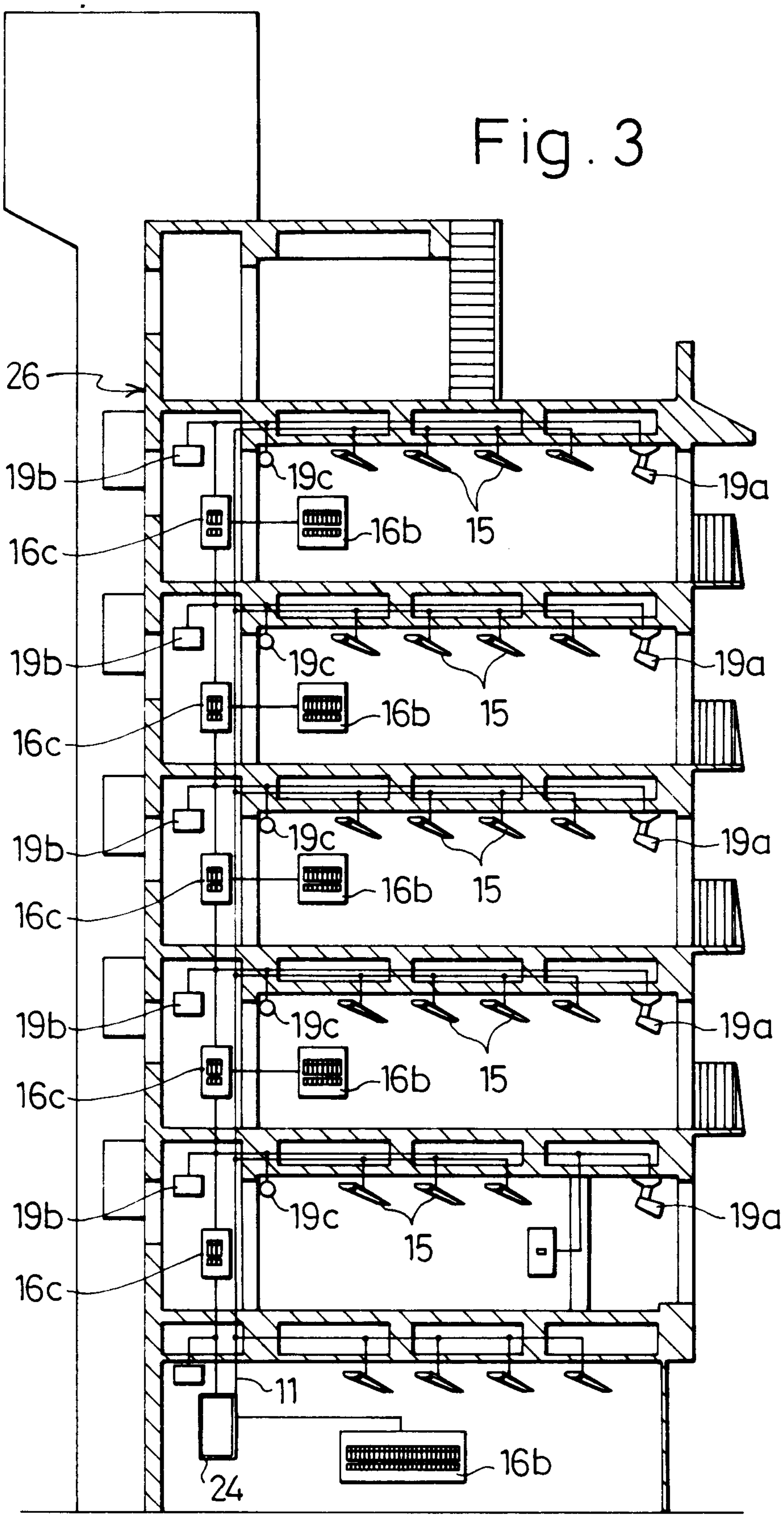

Fig. 4

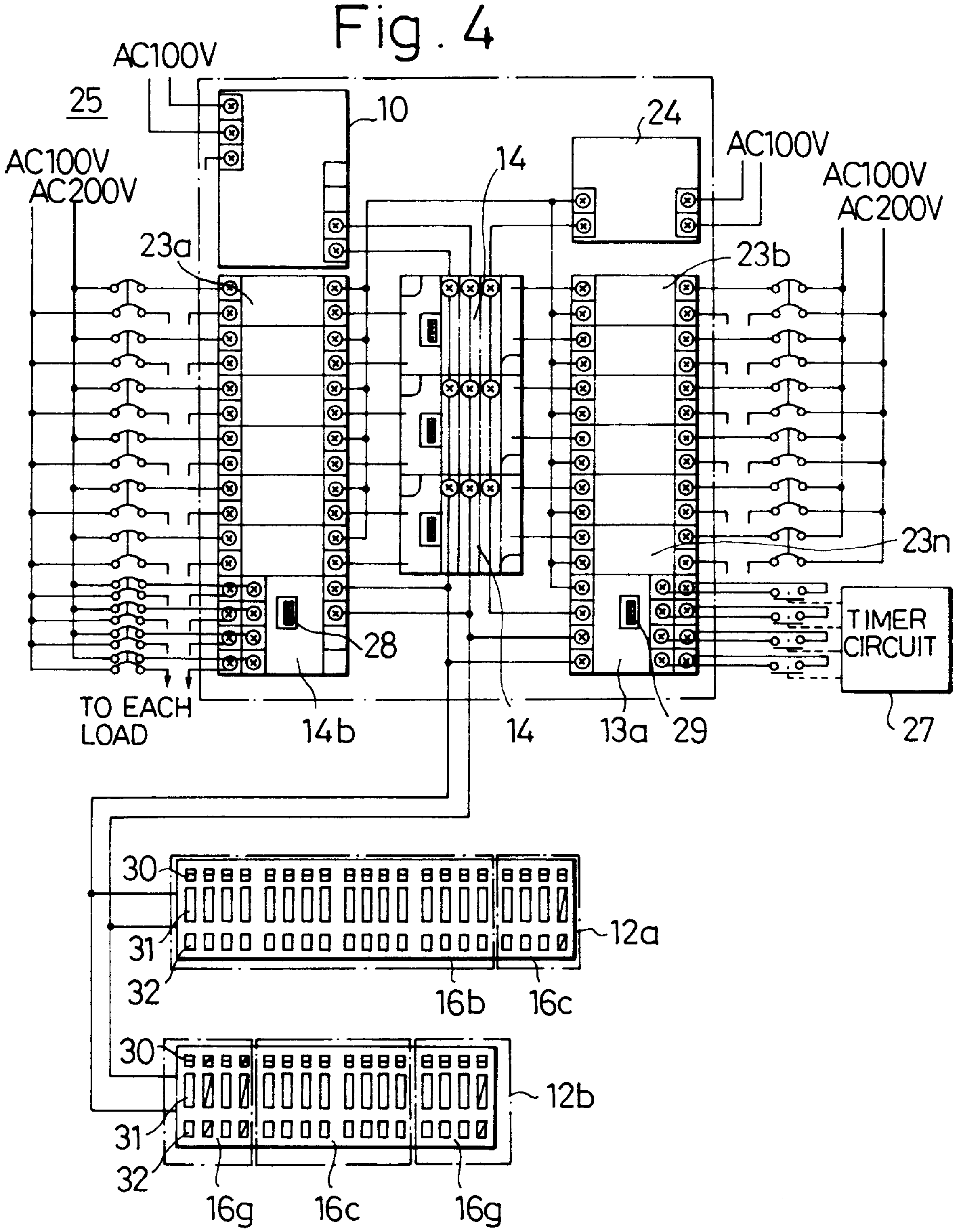
AC100V
25
10
24
AC100V
AC200V
14
AC100V
AC100V
AC200V
23a
23b
23n
28
29
TIMER CIRCUIT
TO EACH LOAD
14b
14
13a
27
30
31
32
12a
16b
16c
30
31
32
12b
16g
16c
16g

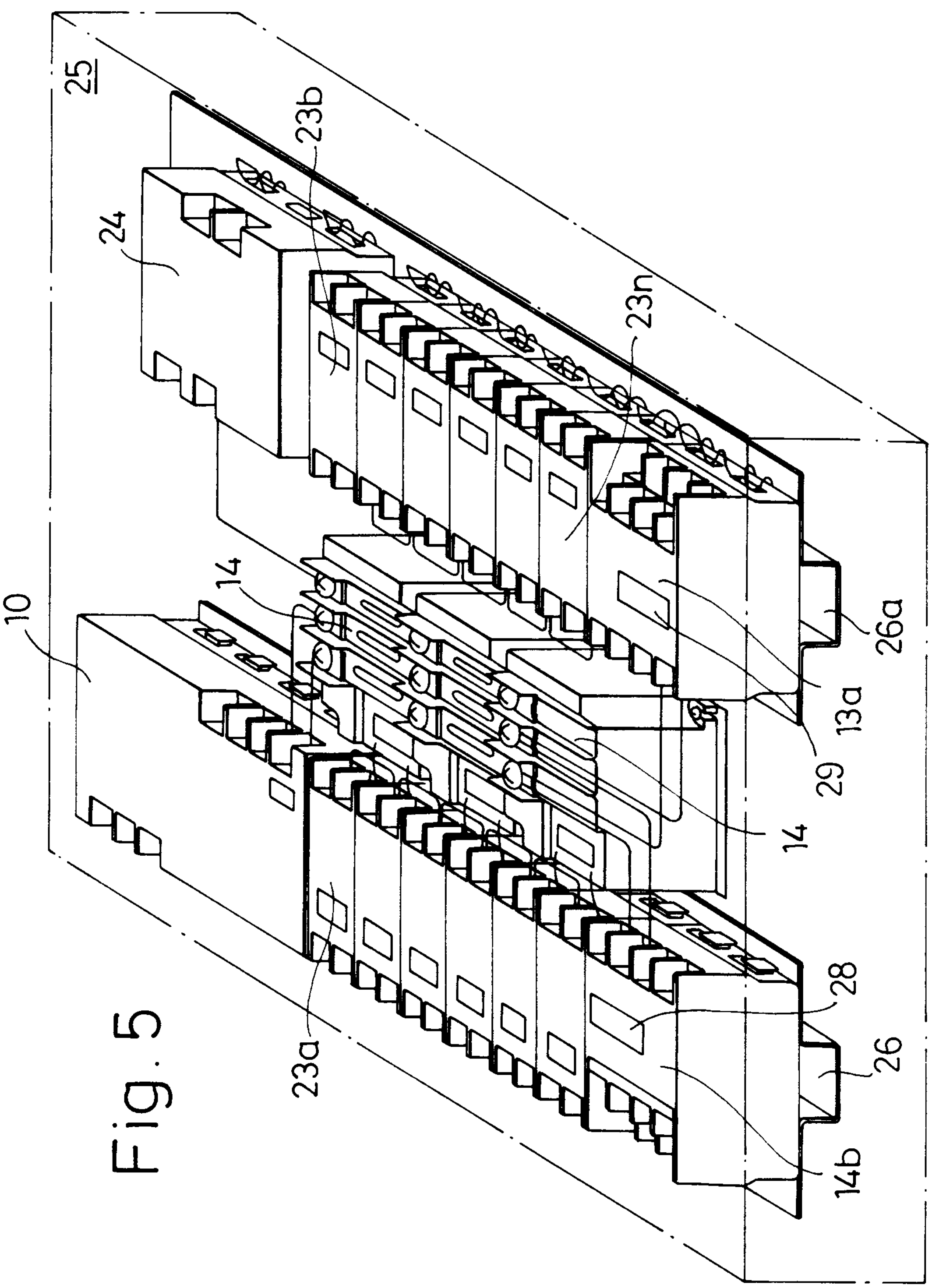


Fig. 5

Fig. 6

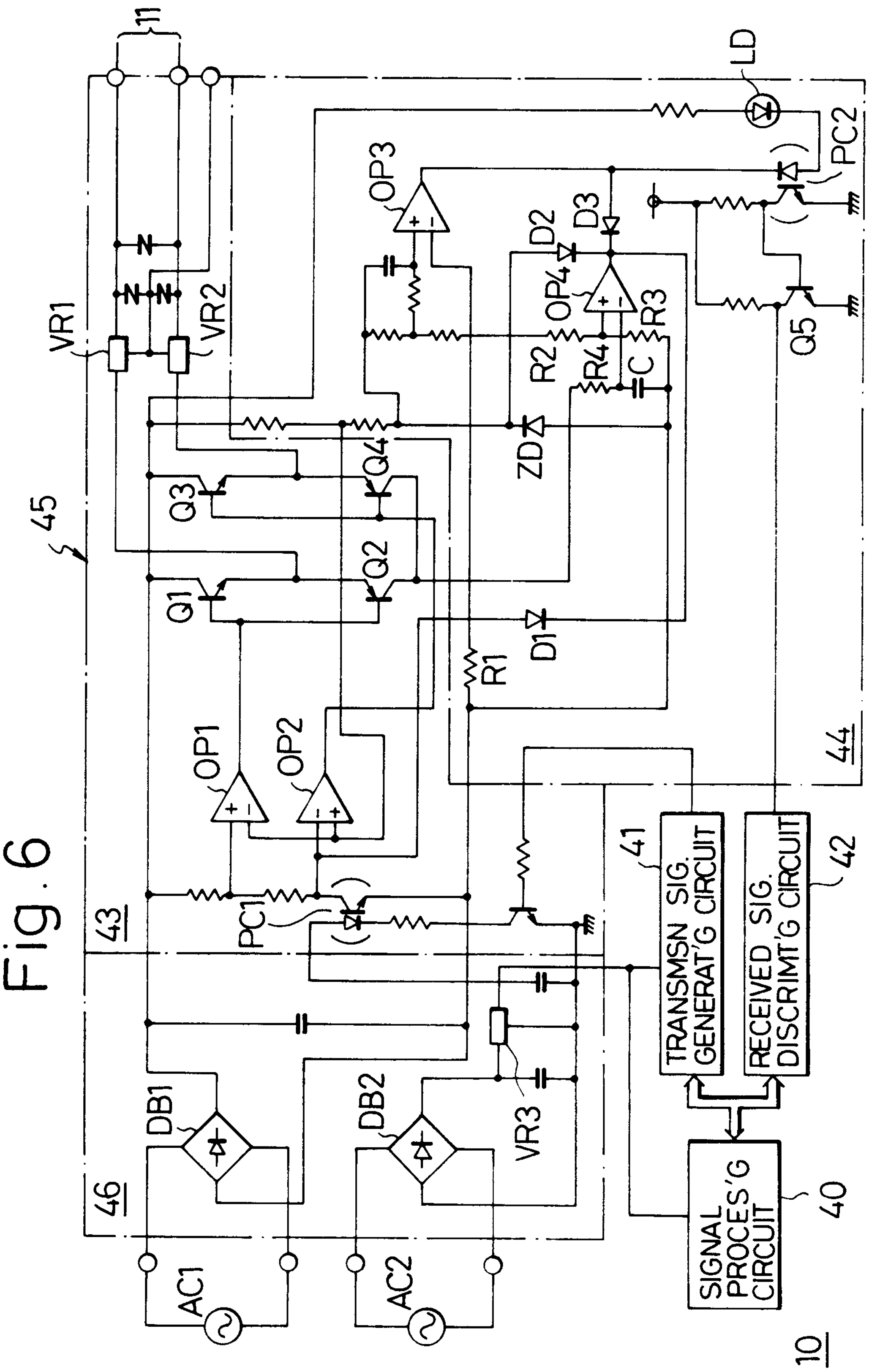
11
45
VR1
VR2
LD
PC2
OP3
D2
D3
OP4
R3
R2
R4
C
ZD
Q3
Q4
Q1
Q2
D1
R1
Q5
OP1
OP2
43
44
PC1
41
42
TRANSMSN SIG. GENERAT'G CIRCUIT
RECEIVED SIG. DISCRIMT'G CIRCUIT
46
DB1
DB2
VR3
SIGNAL PROCES'G CIRCUIT
40
AC1
AC2
10

Fig. 7

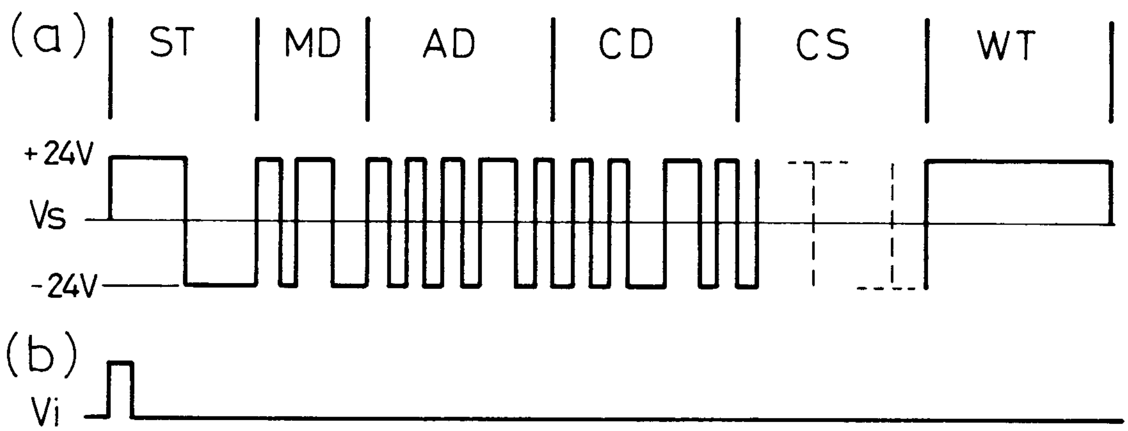


Fig. 9

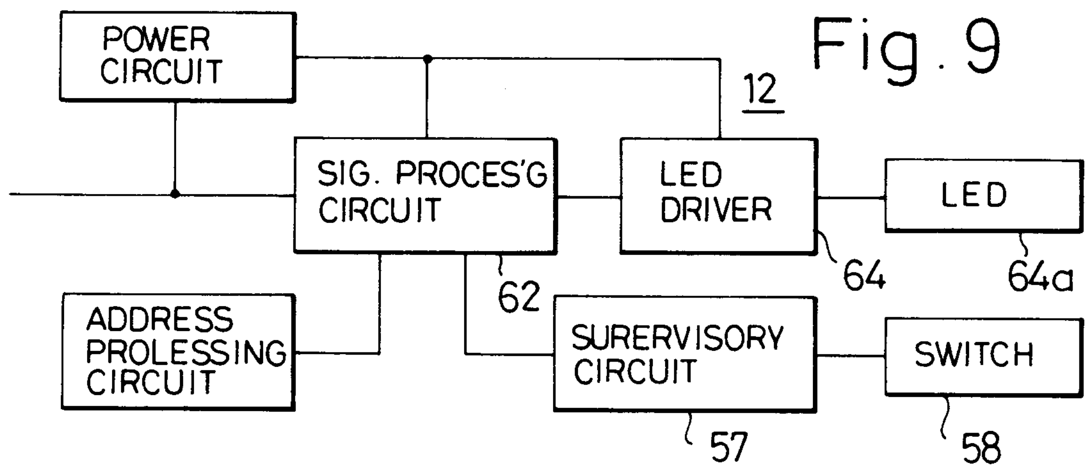


Fig. 10

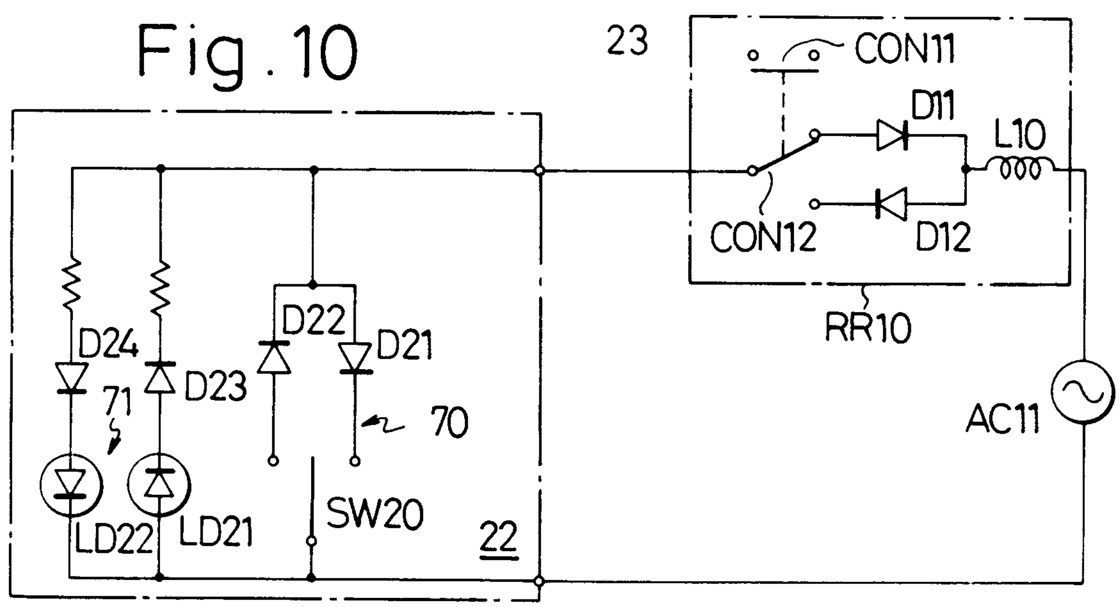

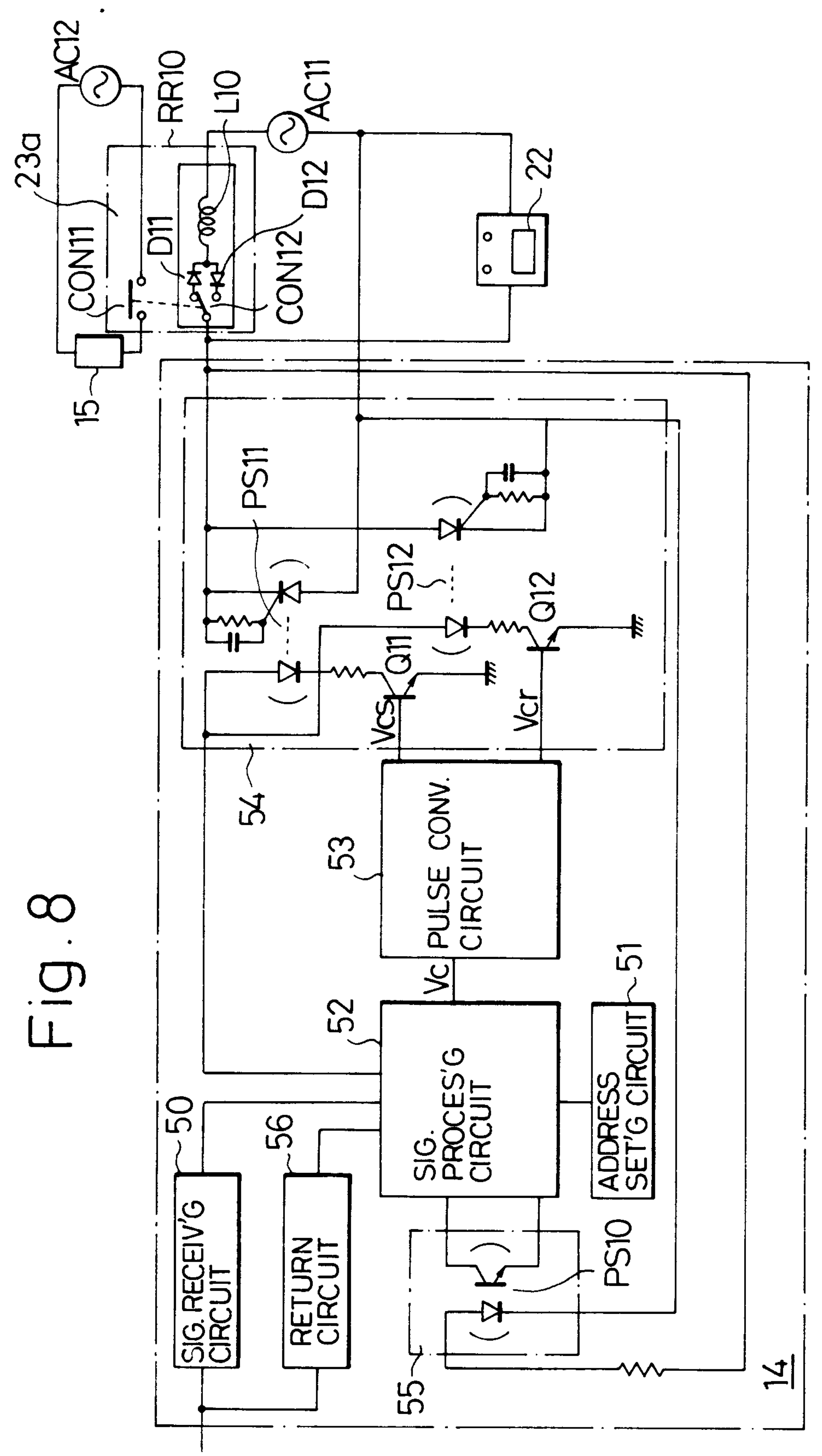
AC12
RR10
L10
AC11
23a
CON11
D11
D12
CON12
22
15
PS11
PS12
Q11
Q12
Vcs
Vcr
54
53
PULSE CONV. CIRCUIT
Vc
52
SIG. PROCES'G CIRCUIT
51
ADDRESS SET'G CIRCUIT
50
SIG. RECEIV'G CIRCUIT
56
RETURN CIRCUIT
PS10
55
14

Fig. 8

Fig.12

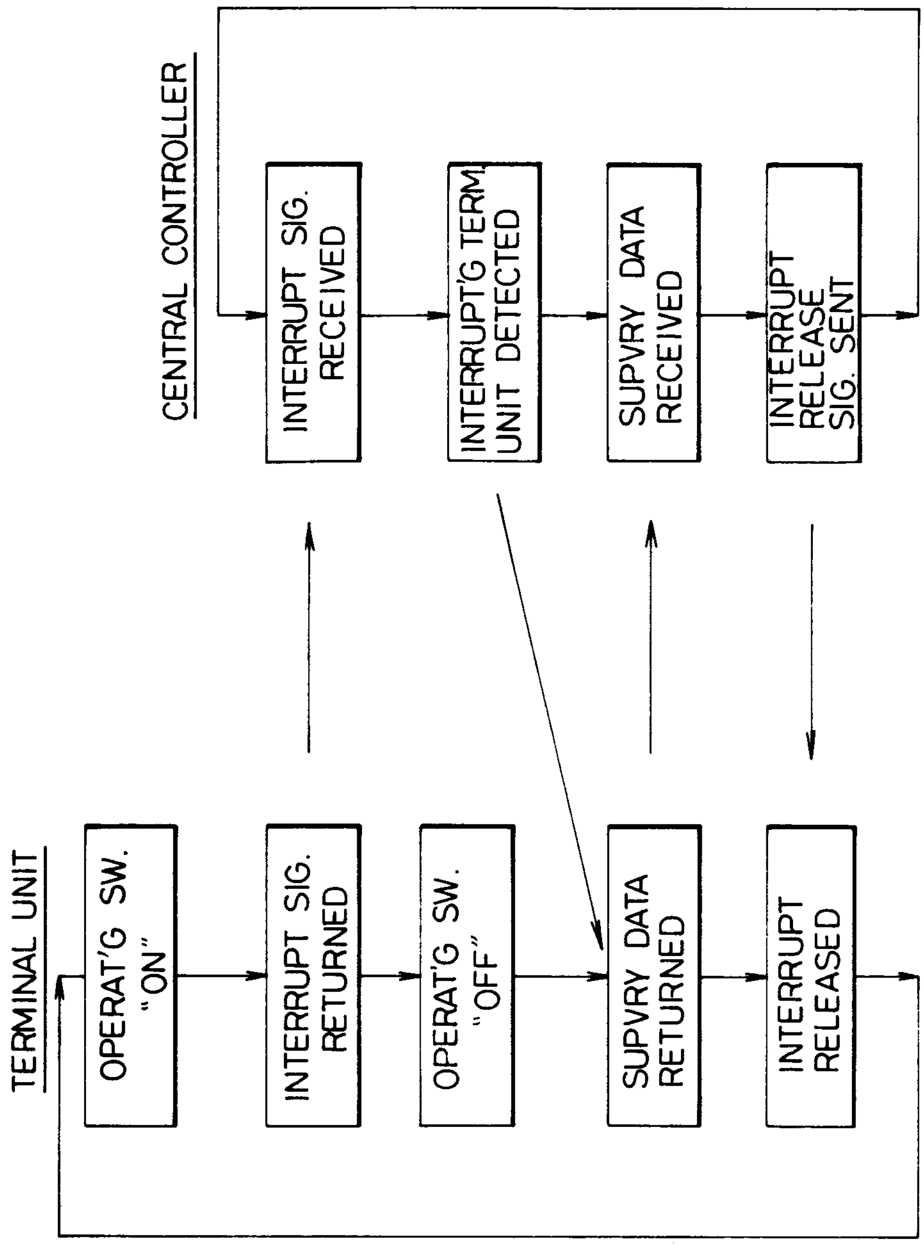
TERMINAL UNIT
OPERAT'G SW. "ON"
INTERRUPT SIG. RETURNED
OPERAT'G SW. "OFF"
SUPVRY DATA RETURNED
INTERRUPT RELEASED
CENTRAL CONTROLLER
INTERRUPT SIG. RECEIVED
INTERRUPT'G TERM. UNIT DETECTED
SUPVRY DATA RECEIVED
INTERRUPT RELEASE SIG. SENT

Fig.13

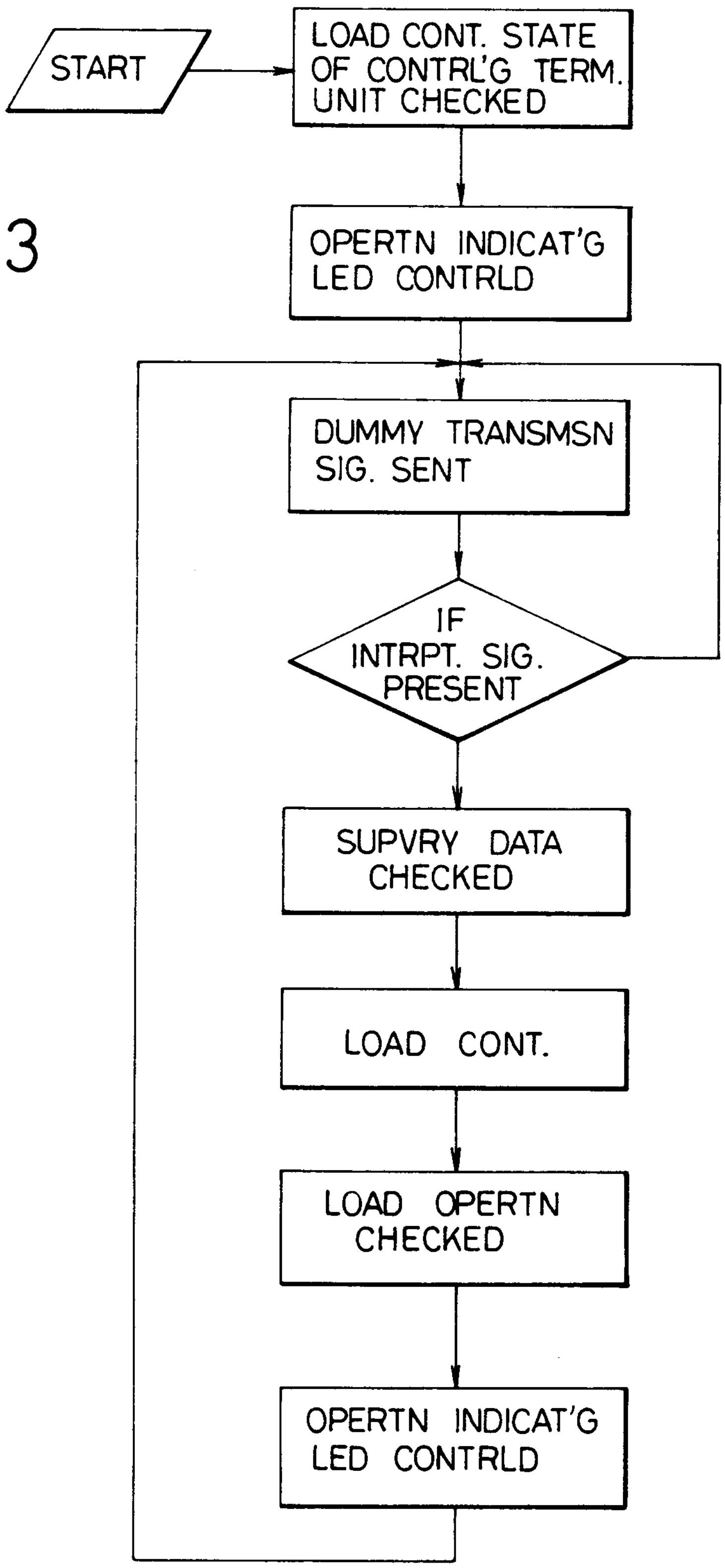
START
LOAD CONT. STATE OF CONTRL'G TERM. UNIT CHECKED
OPERTN INDICAT'G LED CONTRLD
DUMMY TRANSMSN SIG. SENT
IF INTRPT. SIG. PRESENT
SUPVRY DATA CHECKED
LOAD CONT.
LOAD OPERTN CHECKED
OPERTN INDICAT'G LED CONTRLD

Fig. 14

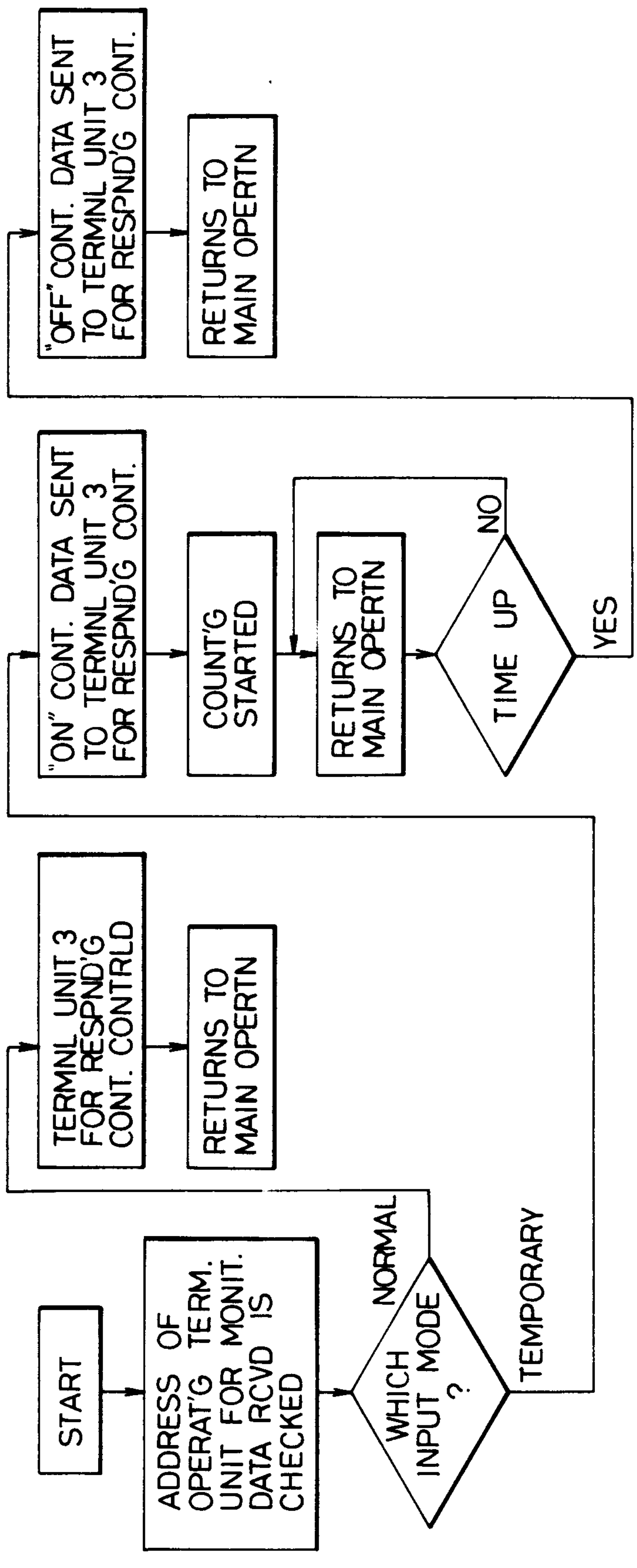
START
ADDRESS OF OPERAT'G TERM. UNIT FOR MONIT. DATA RCVD IS CHECKED
WHICH INPUT MODE ?
NORMAL
TEMPORARY
TERMNL UNIT 3 FOR RESPND'G CONT. CONTRLD
RETURNS TO MAIN OPERTN
"ON" CONT. DATA SENT TO TERMNL UNIT 3 FOR RESPND'G CONT.
COUNT'G STARTED
RETURNS TO MAIN OPERTN
TIME UP
NO
YES
"OFF" CONT. DATA SENT TO TERMNL UNIT 3 FOR RESPND'G CONT.
RETURNS TO MAIN OPERTN